(19) Europäisches Patentamt / European Patent Office / Office européen des brevets

(11) **EP 1 305 948 B1**

(12) **FASCICULE DE BREVET EUROPEEN**

(45) Date de publication et mention de la délivrance du brevet:
**31.10.2018 Bulletin 2018/44**

(21) Numéro de dépôt: **01963037.5**

(22) Date de dépôt: **31.07.2001**

(51) Int Cl.:
**H04N 7/167** *(2011.01)*

(86) Numéro de dépôt international:
**PCT/FR2001/002502**

(87) Numéro de publication internationale:
**WO 2002/013529 (14.02.2002 Gazette 2002/07)**

(54) **METHODE DE DISTRIBUTION SECURISEE DE DONNEES NUMERIQUES REPRESENTATIVES D'UN CONTENU MULTIMEDIA**

VERFAHREN ZUR GESICHERTEN DIGITALEN MULTIMEDIADATENVERTEILUNG

METHOD FOR SECURE DISTRIBUTION OF DIGITAL DATA REPRESENTING A MULTIMEDIA CONTENT

(84) Etats contractants désignés:
**AT BE CH CY DE DK ES FI FR GB GR IE IT LI LU MC NL PT SE TR**

(30) Priorité: **04.08.2000 FR 0010339**

(43) Date de publication de la demande:
**02.05.2003 Bulletin 2003/18**

(73) Titulaire: **Thomson Licensing
92130 Issy-les-Moulineaux (FR)**

(72) Inventeur: **DIEHL, Eric
F-35340 Liffre (FR)**

(74) Mandataire: **Ståhl, Björn Niclas et al
InterDigital CE Patent Holdings
1 rue Jeanne d'Arc
92443 Issy-les-Moulineaux (FR)**

(56) Documents cités:
**EP-A- 0 586 022      EP-A- 0 858 184
WO-A-97/04553      WO-A-99/07149
WO-A1-00/11871      WO-A1-98/56179
WO-A1-99/30499      US-A- 5 563 950**

• **"FUNCTIONAL MODEL OF A CONDITIONAL ACCESS SYSTEM" , EBU REVIEW-TECHNICAL,EUROPEAN BROADCASTING UNION. BRUSSELS,BE, NR. 266, PAGE(S) 64-77 XP000559450 ISSN: 0251-0936 le document en entier**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Domaine de l'invention

La présente invention se rapporte d'une manière générale à la distribution de données à travers des réseaux de diffusion, notamment le réseau Internet. Elle concerne plus particulièrement une méthode de distribution sécurisée de données numériques représentatives d'un contenu multimédia, tel que des séquences vidéo ou audio.

Etat de la technique

Les solutions existantes pour distribuer des données numériques de manière sécurisée, par l'intermédiaire du réseau Internet notamment, sont basées essentiellement sur le chiffrement des données transmises par le fournisseur de contenu et le déchiffrement de ces données par une application exécutée sur un ordinateur connecté au réseau et recevant lesdites données.

Cependant, ces solutions ne garantissent pas une sécurité suffisante car il est quasi impossible de stocker de manière sécurisée une clé de déchiffrement (qui doit rester secrète pour garantir la sécurité) dans un appareil tel qu'un ordinateur.

Par ailleurs, une préoccupation importante des fournisseurs de contenu concerne la protection contre la copie des données numériques représentant ces contenus.

WO 99/30499 décrit une solution pour protéger une interface entre un dispositif électronique et une carte à. Cette solution implique un calcul dynamique d'une clé partagée et le re-chiffrage du flux de contenu.

WO 98/56179 décrit une solution pour l'établissement d'un canal de communication entre deux dispositifs. Le canal est établi quand un premier dispositif a authentifié un deuxième dispositif utilisant un protocole challenge réponse basé sur la cryptographique de clé publique.

WO 00/11871 décrit un système dans lequel un dispositif récepteur demande un contenu d'un serveur qui dynamiquement chiffre le contenu et envoie le contenu chiffré au dispositif récepteur.

EP0936774 décrit un système de distribution de contenus pour lequel la requête d'un terminal client pour un contenu inclut un identifiant du terminal. Cet identifiant est utilisé par le serveur pour générer une clé qui est utilisée pour chiffrer les mots de contrôle utilisés pour chiffrer le contenu. Le contenu chiffré et les mots de contrôle chiffrés sont transmis au terminal.

Exposé de l'invention

L'invention est définie par les revendications indépendantes. Un but de l'invention est donc de proposer une méthode de distribution de données numériques représentatives d'un contenu multimédia qui soit plus sûre que celles de l'art antérieur.

Un autre but de l'invention est de proposer une telle méthode qui permette en outre d'éviter les copies illicites des données numériques.

L'invention concerne à cet effet une méthode de distribution sécurisée de données numériques représentatives d'un contenu multimédia par un fournisseur de contenu à travers un réseau de diffusion, lesdites données étant embrouillées par des mots de contrôle. Selon l'invention, la méthode comprend les étapes consistant à :

   (a) chiffrer les mots de contrôle à l'aide d'une clé de chiffrement reçue d'un dispositif de réception de contenu raccordé audit réseau ; et
   (b) transmettre audit dispositif de réception de contenu :

   - lesdites données numériques embrouillées ; et
   - les mots de contrôle chiffrés à l'aide de la clé de chiffrement dudit dispositif de réception de contenu.

Selon un mode de réalisation avantageux de l'invention, la clé de chiffrement est une clé publique unique associée au dispositif de réception de contenu.

Une clé publique, utilisée dans un système cryptographique asymétrique, peut être transmise à travers un réseau non sécurisé puisque seule la clé privée qui lui est associée permet de déchiffrer les mots de contrôle chiffrés avec la clé publique. Ainsi, il n'est pas nécessaire de prévoir un canal sécurisé pour transmettre la clé publique du dispositif de réception.

Selon une caractéristique particulière de l'invention, la méthode précitée comporte les étapes, antérieures aux étapes (a) et (b), consistant à recevoir la clé publique du dispositif de réception et un certificat cryptographique associé à ladite clé publique ; et à vérifier la validité de la clé publique en analysant le certificat cryptographique associé. L'étape (a) n'est effectuée qu'en cas de vérification positive.

Selon un autre mode de réalisation avantageux de l'invention, la méthode précitée comporte les étapes, antérieures aux étapes (a) et (b), consistant à :

embrouiller les données numériques avec les mots de contrôle ;
stocker dans une base de données associée audit fournisseur de contenu :

- les données numériques embrouillées ; et
- les mots de contrôle utilisés pour embrouiller lesdites données.

Ainsi, le fournisseur de contenu effectue le pré-traitement consistant à embrouiller les données numériques avant de recevoir des requêtes de transmission des données par des dispositifs de réception de contenu. Lorsque de telles requêtes sont reçues par le fournisseur de contenu, celui-ci doit juste effectuer le chiffrement des mots de contrôle à l'aide de la clé reçue du dispositif de réception qui a émis la requête. Ce calcul de chiffrement peut être effectué en temps réel au moment du téléchargement des données numériques embrouillées vers le dispositif de réception à travers le réseau de diffusion ce qui permet un traitement rapide de la requête.

Selon une caractéristique particulière de l'invention, les mots de contrôle sont stockés dans la base de données associée au fournisseur de contenu en étant renfermés dans des messages de contrôle et :

- à l'étape (a), les messages de contrôle sont chiffrés à l'aide de la clé de chiffrement reçue du dispositif de réception ; et
- à l'étape (b), les messages de contrôle chiffrés sont transmis au dispositif de réception de contenu.

L'invention concerne également, selon un deuxième aspect, une méthode de distribution sécurisée de données numériques représentatives d'un contenu multimédia à un dispositif de réception de contenu à travers un réseau de diffusion, lesdites données numériques étant embrouillées par des mots de contrôle. Selon l'invention, la méthode comprend les étapes consistant pour ledit dispositif de réception de contenu raccordé audit réseau à :

(i) transmettre au fournisseur de contenu une clé de chiffrement associée audit dispositif de réception de contenu ;
(j) recevoir dudit fournisseur de contenu :

- lesdites données numériques embrouillées ; et
- les mots de contrôle chiffrés à l'aide de ladite clé ;

(k) déchiffrer lesdits mots de contrôles reçus à l'aide d'une clé de déchiffrement associée à la clé de chiffrement dudit dispositif de réception ; et
(l) désembrouiller, à l'aide des mots de contrôle déchiffrés, lesdites données numériques pour les transformer en un signal apte à être présenté à un utilisateur.

Selon un mode de réalisation avantageux, la clé de chiffrement est une clé publique unique et la clé de déchiffrement est la clé privée unique associée à ladite clé publique.

Selon une caractéristique particulière de l'invention, le dispositif de réception de contenu est apte à coopérer avec un élément de sécurité, et la paire de clés publique et privée est associée de manière unique audit élément de sécurité et est mémorisée dans ledit élément de sécurité.

Selon une autre caractéristique de l'invention, l'élément de sécurité est fourni à l'utilisateur du dispositif de réception de contenu par une autorité de confiance. L'élément de sécurité contient, en plus de la paire de clés publique et privée unique, un certificat cryptographique délivré par ladite autorité et, à l'étape (i), le dispositif de réception de contenu transmet au fournisseur de contenu, en plus de la clé publique, ledit certificat cryptographique associé.

Selon une caractéristique avantageuse de l'invention, l'élément de sécurité est un élément détachable, notamment une carte à puce.

L'invention concerne également, selon un troisième aspect, une méthode de distribution sécurisée de données numériques représentatives d'un contenu multimedia à un dispositif récepteur de contenu, ledit dispositif étant adapté à être raccordé d'une part à un réseau de diffusion, notamment le réseau Internet ; et d'autre part à un réseau domestique numérique et lesdites données numériques étant embrouillées par des mots de contrôle. Selon ce troisième aspect de l'invention, la méthode comprend les étapes consistant pour le dispositif de réception à :

(A) transmettre, via le réseau de diffusion, au fournisseur de contenu une clé publique associée audit réseau domestique ;
(B) recevoir, via le réseau de diffusion, dudit fournisseur de contenu :

- lesdites données numériques embrouillées ; et
- les mots de contrôle chiffrés à l'aide de ladite clé publique du réseau domestique ;

(C) transmettre, via le réseau domestique numérique, les données embrouillées et les mots de contrôle chiffrés à un dispositif de présentation raccordé au réseau numérique domestique, ledit dispositif étant apte à :

- déchiffrer les mots de contrôle à l'aide de la clé privée associée à ladite clé publique du réseau domestique ; et
- désembrouiller, à l'aide des mots de contrôle déchiffrés, lesdites données numériques pour les transformer en un signal apte à être présenté à un utilisateur.

Selon un mode de réalisation avantageux, le dispositif de réception de contenu est apte à coopérer avec un premier élément de sécurité, et la clé publique associée au réseau domestique est mémorisée dans ce premier élément de sécurité.

Selon ce mode de réalisation, le dispositif de présentation est apte à coopérer avec un deuxième élément de sécurité, et la clé privée associée au réseau domestique est mémorisée dans ce deuxième élément de sécurité.

Selon une caractéristique avantageuse de l'invention, le premier élément de sécurité et/ou le deuxième élément de sécurité est un élément détachable, notamment une carte à puce.

Brève description des dessins

L'invention sera mieux comprise à la lecture de la description suivante de modes de réalisation particuliers, non limitatifs, de celle-ci faite en référence aux dessins annexés dans lesquels :

- la figure 1 est un schéma sous forme de blocs fonctionnels des différents éléments permettant la mise en oeuvre d'un premier mode de réalisation de l'invention ;
- les figures 2a et 2b illustrent schématiquement des données qui sont échangées par des éléments de la figure 1 ;
- la figure 3 illustre les échanges intervenant entre les principaux éléments de la figure 1 lors de la mise en oeuvre de la méthode de l'invention ;
- la figure 4 est un schéma sous forme de blocs illustrant un deuxième mode de réalisation de l'invention.

Description détaillée de modes de réalisation de l'invention

Dans la suite de la description, on se référera uniquement à des données numériques représentant un contenu vidéo mais naturellement, l'invention s'applique à la distribution de tout type de contenu multimédia, qu'il s'agisse de séquences de données audio, vidéo ou textuelles ou mêmes de fichiers de données informatiques utilisées pour la mise en oeuvre de logiciels.

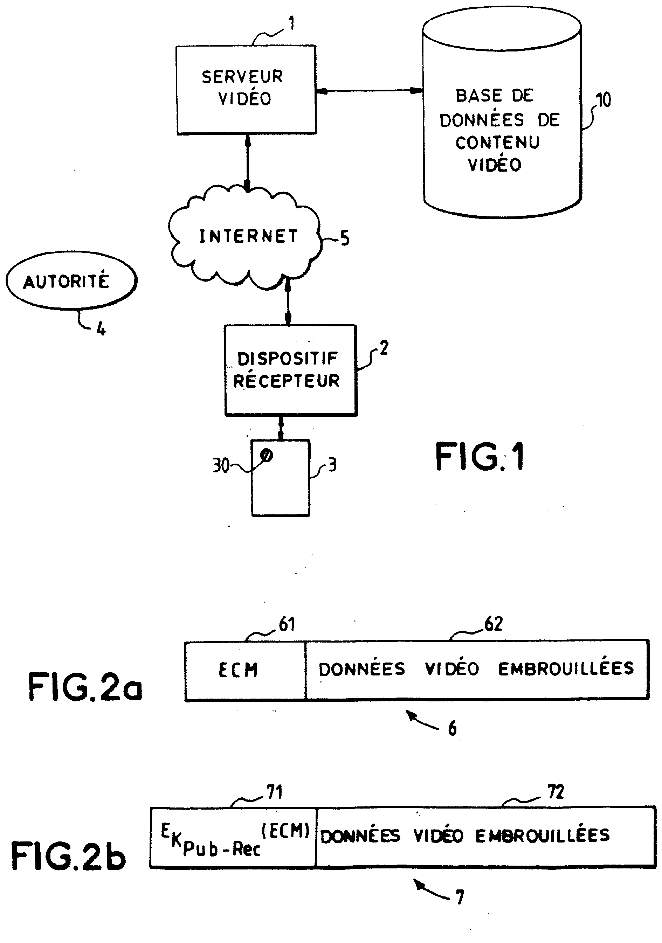

Sur la figure 1, on a représenté un serveur vidéo 1 relié à une base de données de contenus vidéo 10. Ces éléments sont ceux d'un fournisseur de contenu qui met à la disposition d'utilisateurs des contenus vidéo par l'intermédiaire d'un réseau de diffusion tel que le réseau Internet 5.

Les données numériques représentant les contenus vidéo sont mémorisées dans la base de données sous une forme compressée (de manière à pouvoir être transmises facilement par l'intermédiaire du réseau de diffusion) et embrouillée par des mots de contrôle notés généralement CW (de l'anglais Control Word). Cet embrouillage est effectué selon un schéma cryptographique symétrique avec des clés, les mots de contrôle, qui sont renouvelées périodiquement et qui sont mémorisées dans des messages de contrôle notés ECM (de l'anglais « Entitlement Control Message »). Ces messages de contrôle sont mémorisés, avec les données embrouillées, dans la base de données.

Ce pré-traitement consistant à compresser et embrouiller les données pour les mémoriser dans la base de données 10 est préférentiellement effectué avant de mettre les données à disposition des utilisateurs. Il peut même être effectué en dehors de la base de données ou du serveur vidéo.

L'embrouillage des données est préférentiellement effectué selon la norme DVB CS (de l'anglais « Digital Video Broadcasting Content Scrambling » signifiant littéralement « Diffusion Vidéo Numérique Embouillage du Contenu ») et les données sont, dans un mode de réalisation préférentiel, codées sous forme de paquets selon la norme MPEG 2 (ISO/IEC 13818-1) pour être transmises sur le réseau de diffusion.

On a représenté à la figure 2a, de manière schématisée, le contenu d'un paquet de données 6 tel qu'il est mémorisé dans la base de données 10. Ce paquet de données comporte des données vidéo embrouillées 62 et un message de contrôle ECM 61 qui contient le mot de contrôle CW utilisé pour embrouiller les données 62. Naturellement, une séquence vidéo complète est mémorisée dans la base de données sous la forme d'une succession de paquets du type du paquet 6 de la figure 2a. On notera également que généralement, les messages ECM contenant les mots de contrôle ayant servi à embrouiller des données numériques sont transmis en avance, dans le flux de données, par rapport aux données embrouillées avec ces mots de contrôle.

En revenant à la figure 1, le serveur vidéo 1 comporte des moyens pour envoyer ou recevoir des messages ou des données vers ou du réseau Internet 5. Il comporte également des moyens pour chiffrer les messages ECM avant de les transmettre sur le réseau comme on le verra ci-dessous.

Un dispositif récepteur 2 est également relié au réseau Internet. Ce dispositif récepteur est généralement disposé chez un utilisateur qui désire accéder à des programmes vidéo par le réseau Internet. Il peut s'agir notamment d'un ordinateur ou d'un décodeur numérique (ou « Set-Top Box » en anglais). Celui-ci possède une interface utilisateur (du type clavier, écran, télécommande, etc.) pour permettre notamment à un utilisateur de sélectionner des programmes vidéo qu'il souhaite recevoir.

Le dispositif récepteur comporte également des moyens pour recevoir des flux de données du réseau Internet, par téléchargement en temps réel (« streaming » an anglais), c'est à dire en visualisant le contenu au fur et à mesure du chargement, ou en différé (« downloading » en anglais) c'est à dire sans visualisation en temps réel du contenu.

Il comporte aussi un désembrouilleur (« descrambler » en anglais) capable de désembrouiller comme on le verra ci-dessous, des paquets de données numériques embrouillées qu'il reçoit, à l'aide des mots de contrôle qui ont servi à embrouiller les données.

Le dispositif récepteur 2 comporte en outre un lecteur de carte à puce destiné à recevoir une carte 3. La carte à puce 3 comporte un processeur sécurisé 30 qui, comme cela est bien connu de l'homme de l'art, permet de mémoriser de manière sécurisée des données telles que des clés cryptographiques.

La carte à puce 3 est délivrée de manière préférentielle par une autorité de confiance 4 qui peut être dépendante ou indépendante du fournisseur de contenu. Pour pouvoir accéder au service de distribution de séquences vidéo par le fournisseur de contenu, un utilisateur doit d'abord s'abonner à ce service auprès de l'autorité de confiance désignée par le fournisseur de contenu (contre paiement ou non selon la politique commerciale du fournisseur de contenu).

L'utilisateur reçoit en échange une carte à puce 3 qui contient une paire de clés privée $K_{Pri\_Rec}$ et publique $K_{Pub\_Rec}$ unique propre à la carte 3, c'est à dire que chaque carte à puce fournie par l'autorité de confiance comporte une paire de clés privée/publique différente de celle des autres cartes fournies par la même autorité. La paire de clés est générée par l'autorité de confiance 4 et cette dernière fournit, associé à la clé publique, un certificat cryptographique.

Un tel certificat contient un ensemble de données (telles que la clé publique, l'identification de l'utilisateur, une date de validité de la clé publique) qui attestent que la clé publique appartient bien à une personne donnée et il est signé par l'autorité de confiance. On utilisera préférentiellement le standard X509 (ISO/IEC 9594-8) pour générer le certificat.

Par exemple, le certificat pourra avoir la forme suivante :

$K_{Pub\_Rec}$|Nom utilisateur|date expiration $K_{Pub\_Rec}$|signature
La signature étant calculée comme suit :

$$E_{K_{Pri\_Autorité}}\left(Hash\left(K_{Pub\_Rec}\middle|Nom\ utilisateur\middle|date\ expiration\ K_{Pub\_Rec}\right)\right)$$

avec :

- « | » représentant l'opération de concaténation ;
- « Hash (x) » représentant une fonction de hachage, c'est à dire une fonction mathématique qui transforme un ensemble de données d'entrée « x » en un ensemble de données « y » de taille fixe, souvent inférieure à la taille des données d'entrée, et représentatives des données d'entrées ; cette fonction étant de plus une fonction à sens unique (« one way function » en anglais) c'est à dire que, connaissant « y », il est impossible de retrouver « x » tel que y= Hash(x) ; et
- $E_K(M)$ représente l'opération de chiffrement du message M avec la clé K.

La carte à puce 3 contient également de manière préférentielle des moyens pour établir un protocole de paiement avec un intermédiaire financier ou directement avec le fournisseur de contenu. Les protocoles de paiement, de type micro-paiement, c'est à dire dédiés à des paiements de faibles montants, ou de type macro-paiement, pour des montants plus élevés, sont biens connus de l'homme du métier et ne seront pas décrit plus avant.

La carte à puce 3 comporte aussi des moyens pour déchiffrer les messages ECM qu'elle reçoit à l'aide de la clé privée $K_{Pri\_Rec}$ comme on le verra ci-dessous.

D'une manière générale, le principe de l'invention est le suivant : lorsqu'un utilisateur a sélectionné une séquence vidéo qu'il souhaite recevoir du serveur vidéo 1 sur son dispositif récepteur 2, le dispositif récepteur transmet, via le réseau Internet, la clé publique $K_{Pub\_Rec}$ ainsi que son certificat mémorisés dans la carte à puce 3. Le serveur vidéo vérifie alors la validité de la clé publique en analysant le certificat et, si la clé publique est valide, le serveur vidéo chiffre les messages ECM contenant les mots de contrôle ayant servi à embrouiller la séquence de données vidéo correspondante avec la clé publique $K_{Pub\_Rec}$ reçue. C'est à dire que, pour chaque paquet de données 6 tel celui de la figure 2a, le message ECM 61 en clair est remplacé par un message chiffré $E_{K_{Pub\_Rec}}$ (ECM) 71 pour former un paquet de données 7 (figure 2b) qui contient les mêmes données embrouillées 72 que celles 62 du paquet 6.

Le serveur vidéo transmet ensuite au dispositif récepteur les paquets de données 7 contenant la séquence demandée de données vidéo embrouillées et les messages ECM chiffrés.

Le dispositif récepteur, lorsqu'il reçoit ces données, en extrait les messages ECM chiffrés et il les transmet à la carte à puce 3 qui comporte des moyens pour déchiffrer lesdits messages à l'aide de la clé privée $K_{Pri\_Rec}$ de la carte. La carte renvoie au dispositif récepteur les messages ECM déchiffrés qui contiennent les mots de contrôle ayant servi à embrouiller les données vidéo.

A l'aide de ces mots de contrôle, et de manière bien connue en soit, le dispositif récepteur désembrouille les données numériques correspondant à la séquence vidéo demandée.

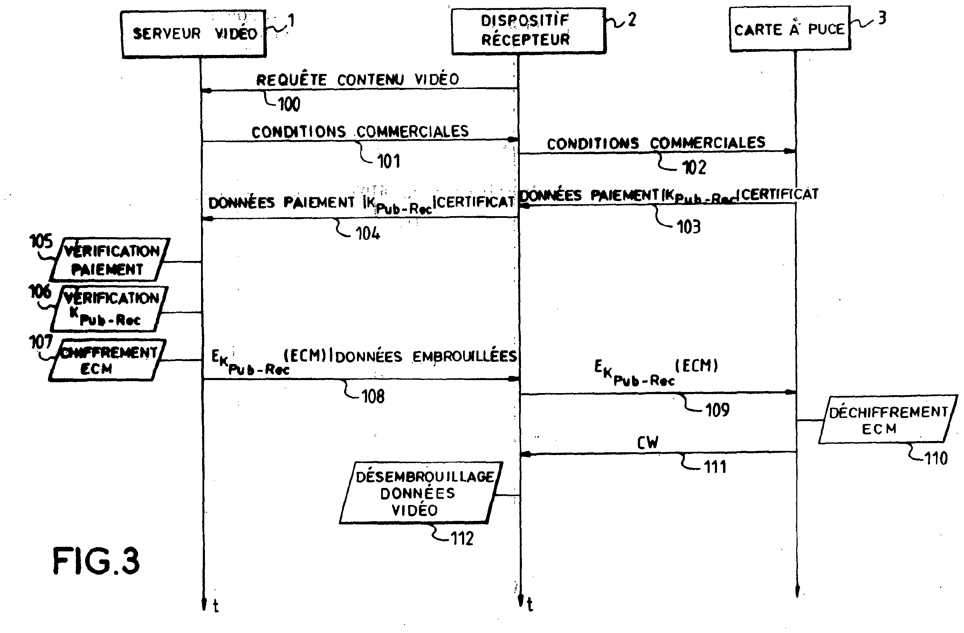

Nous allons maintenant décrire de manière plus détaillée, en liaison avec la figure 3, les différentes étapes de la méthode de distribution de données représentatives de contenus multimédias de l'invention.

Sur la figure 3, on a représenté par trois axes verticaux descendants t l'axe du temps pour illustrer les échanges entre le serveur vidéo 1, le dispositif récepteur 2 et la carte à puce 3 ainsi que les traitements effectués par ces trois éléments.

Lors de la première étape 100, on suppose que l'utilisateur a sélectionné, par l'intermédiaire de l'interface utilisateur du dispositif récepteur, une séquence vidéo, par exemple un film ou une émission particulière, qu'il souhaite recevoir. Le dispositif récepteur 2 construit alors un message de requête de contenu vidéo qu'il émet à l'adresse du serveur vidéo 1. Cette requête contient naturellement un identifiant de la séquence vidéo demandée ainsi qu'un identifiant du dispositif récepteur.

A l'étape suivante 101, le serveur vidéo envoie en retour au dispositif récepteur les conditions commerciales, incluant le prix, relatives à la délivrance de la séquence vidéo choisie. Ces conditions sont présentées à l'utilisateur par l'intermédiaire de l'interface utilisateur et celui-ci décide alors s'il souhaite poursuivre la transaction ou non.

Dans le cas où il souhaite toujours recevoir la séquence vidéo, l'utilisateur le signifie par une commande saisie par l'interface utilisateur et, à l'étape 102, le dispositif récepteur envoie à la carte à puce 3 les conditions commerciales reçues à l'étape 101 ou seulement certains éléments, tels que le prix, de ces conditions.

En fait, selon la méthode de paiement choisie, la carte à puce pourra ne pas être impliquée dans le paiement de la séquence vidéo, par exemple dans le cas où un protocole de paiement basé sur une carte de crédit est utilisé (tel que le protocole SET, de l'anglais « Secure Electronic Transaction »). Nous supposons dans l'exemple de la figure 3 que la carte à-puce 3 est utilisée pour le paiement de la séquence vidéo choisie (par exemple la carte à puce comporte une fonction « porte-monnaie électronique » mettant en oeuvre un protocole de micro-paiement).

La carte à puce envoie donc, à l'étape 103, à l'attention du dispositif récepteur, un message contenant :

- des données relatives au paiement ;
- la clé publique unique $K_{Pub\_Rec}$ mémorisée dans la carte ; et
- le certificat associé à cette clé publique.

Ce message est retransmis tel quel par le dispositif récepteur au serveur vidéo à l'étape 104. Dans le cas où la carte à puce n'est pas impliquée dans le paiement, les données concernant le paiement sont concaténées par le dispositif récepteur aux données reçues de la carte à puce à l'étape précédente pour former le message transmis à l'étape 104.

Le serveur vidéo procède alors à la vérification des données concernant le paiement (étape 105). Si ces données prouvent que le paiement a bien été effectué, alors le serveur vérifie la validité de la clé publique $K_{Pub\_Rec}$ en analysant le certificat reçu avec cette clé (étape 106).

Pour cela, le serveur possède la clé publique $K_{Pub\_Autorité}$ de l'autorité de confiance 4 qui délivre les cartes à puces 3. Il peut donc d'une part vérifier la signature du certificat en effectuant l'opération :

$$D_{K_{Pub\_Autorité}}\left(E_{K_{Pri\_Autorité}}\left(Hash\left(K_{Pub\_Rec}\middle|Nom\ utilisateur\middle|date\ expiration\ K_{Pub\_Rec}\right)\right)\right)$$

avec « $D_K(M)$ » représentant l'opération de déchiffrement, avec la clé K, du message M et d'autre part effectuer l'opération :

Hash ($K_{Pub\_Rec}$|Nom utilisateur|date expiration $K_{Pub\_Rec}$) à l'aide des autres données du certificat.

Les deux opération ci-dessus doivent normalement donner le même résultat si le certificat n'a pas été altéré.

Le serveur peut ainsi vérifier que la clé publique $K_{Pub\_Rec}$ reçue du dispositif récepteur est bien celle qui a été attribuée par l'autorité de confiance à l'utilisateur qui possède la carte à puce 3.

Une fois cette vérification faite, à l'étape suivante 107, le serveur chiffre, avec la clé $K_{Pub\_Rec}$, les messages ECM contenant les mots de contrôle utilisés pour embrouiller les données correspondant à la séquence vidéo choisie par l'utilisateur.

On choisira de préférence l'algorithme cryptographique RSA (du nom des créateurs Rivest, Shamir et Adleman), bien connu de l'homme du métier en utilisant des clés privées et publiques (délivrées par l'autorité de confiance 4) de taille 1024 bits.

A l'étape suivante 108, le serveur transmet (par téléchargement comme on l'a vu plus haut) les messages de contrôles chiffrés et les données embrouillées correspondant à la séquence choisie par l'utilisateur.

Le dispositif récepteur extrait alors des données reçues les messages de contrôle chiffrés et il les transfère à la carte à puce 3 à l'étape 109.

A l'étape 110, la carte à puce déchiffre les messages de contrôle avec sa clé privée $K_{Pri\_Rec}$ et elle retourne les mots de contrôle CW en clair au dispositif récepteur (étape 111).

Celui-ci est alors en mesure, à l'étape 112, de désembrouiller les données numériques reçues à l'étape 108, avec ces mots de contrôle. Il peut ensuite directement présenter ces données à l'utilisateur pour qu'il les visualise (par exemple s'il s'agit d'un ordinateur équipé d'un écran). Mais il peut aussi transmettre ces données à un autre dispositif pour visualisation.

En variante, il est également possible que la carte à puce 3 comporte un désembrouilleur et que le désembrouillage des données numériques soit effectué dans la carte à puce.

Nous allons maintenant décrire un deuxième mode de réalisation de l'invention qui permet en outre d'assurer une protection contre la copie des contenus multimédias distribués.

Les éléments communs avec le mode de réalisation de la figure 1 portent les mêmes numéros de référence et ne seront pas décrits davantage.

La première différence avec le système de la figure 1 est que le dispositif récepteur 20, en plus d'être relié au réseau Internet 5 pour télécharger des données, est raccordé à un réseau domestique numérique 50. A part cela, le dispositif récepteur 20 comporte les mêmes éléments que le dispositif récepteur 2, notamment un lecteur de carte à puce adapté à recevoir une carte 21 délivrée par l'autorité de confiance 4.

En revanche, la carte à puce 21 contient seulement une clé publique attribuée par l'autorité de confiance.

Une deuxième carte à puce 25 contenant la clé privée associée à ladite clé publique est également délivrée à l'utilisateur par l'autorité de confiance mais celle-ci est destinée à être insérée dans le lecteur de carte d'un dispositif de présentation 24, également raccordé au réseau domestique numérique 50.

On considérera dans la suite de la description que la clé publique contenue dans la carte 21 est la clé publique $K_{Pub\_DHN}$ du réseau domestique 50 et que la clé privée contenue dans la carte 25 est la clé privée $K_{PRI\_DHN}$ du réseau domestique 50.

Le principe de ce mode de réalisation est le suivant : lorsqu'un utilisateur désire recevoir une séquence vidéo, les étapes 100 à 102 décrites à la figure 3 se déroulent de la même manière à la suite de quoi, la clé publique du réseau domestique $K_{Pub\_DHN}$ (mémorisée dans la carte à puce 21) est transmise au serveur vidéo 1. Celui-ci chiffre donc les messages de contrôle ECM avec la clé $K_{Pub\_DHN}$ et retourne ces messages chiffrés, avec les données embrouillées correspondant à la séquence vidéo choisie, au dispositif récepteur 20.

Par contre, comme la carte à puce 21 insérée dans ce dernier ne contient pas la clé privée $K_{PRI\_DHN}$, le dispositif récepteur 20 ne peut pas désembrouiller les données. D'ailleurs, d'une manière préférentielle, le dispositif récepteur 20 ne comporte pas de désembrouilleur.

Ce dispositif récepteur sert uniquement de point d'entrée sur le réseau domestique numérique pour recevoir des données d'un réseau de diffusion externe tel qu'Internet.

Les données numériques correspondant à la séquence vidéo choisie par l'utilisateur peuvent donc circuler dans le réseau domestique 50 en étant toujours embrouillées. Elles ne seront désembrouillées que dans un dispositif de présentation 24 (par exemple un téléviseur numérique) qui comporte une carte à puce 25, contenant la clé privée $K_{PRI\_DHN}$ du réseau domestique 50, capable de déchiffrer les messages de contrôle ECM chiffrés avec la clé publique $K_{Pub\_DHN}$ du réseau domestique.

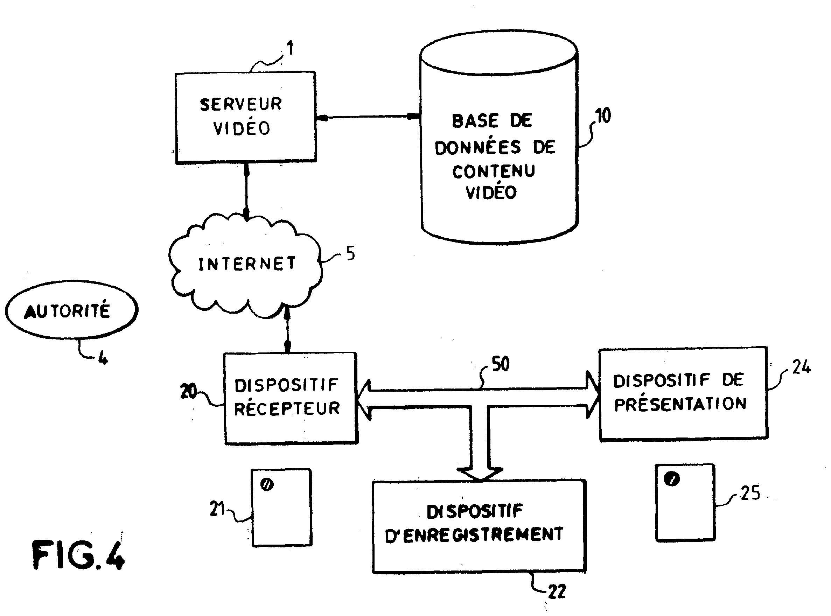

On a également représenté à la figure 4 un dispositif d'enregistrement 22 raccordé au réseau domestique numérique 50. Ce dispositif est notamment un magnétoscope numérique ou un appareil capable d'enregistrer des disque optiques, du type DVD (de l'anglais « Digital Versatile Disc » signifiant littéralement « Disque polyvalent numérique »).

Grâce à la méthode de l'invention, comme les données qui circulent sur le réseau domestique 50 sont embrouillées, celles-ci ne peuvent être enregistrées que sous cette forme par le dispositif d'enregistrement 22. Il est ainsi possible de réaliser des copies des données reçues du fournisseur de contenu par téléchargement du réseau Internet 5 mais-ces copies ne peuvent être relues que dans le réseau domestique 50.

En effet, comme les messages de contrôle ECM associés aux données embrouillées sont chiffrés à l'aide de la clé publique du réseau domestique $K_{PUB\_DHN}$, ces messages ne peuvent être déchiffrés que par le dispositif de présentation 24 raccordé au réseau domestique 50.

L'autorité de confiance 4 s'assure bien entendu que les paires de clés privées/publiques (contenues dans les paires de cartes 21, 25) qu'elle fournit aux utilisateurs sont toutes différentes les unes des autres et sont uniques. Il est donc impossible de relire une copie effectuée sur le réseau domestique 50 sur un autre réseau domestique qui possédera une autre paire de clés privée/publique.

L'invention permet donc de garantir que les données reçues du fournisseur de contenu ne seront pas copiées de manière illicite pour être relues en dehors du réseau domestique de l'utilisateur.

Naturellement, le réseau domestique 50 peut comporter plusieurs dispositifs récepteurs (qui contiennent une carte à puce contenant la clé publique $K_{PUB\_DHN}$), plusieurs dispositifs de présentation (qui contiennent une carte à puce contenant la clé privée $K_{PRI\_DHN}$) et plusieurs dispositifs d'enregistrement. Les dispositifs récepteurs sont notamment un décodeur numérique ou un juke-box (appareil capable de télécharger des données d'Internet mais pas de les présenter) ; les dispositif de présentation sont notamment un téléviseur numérique ou des haut-parleurs capables de recevoir un signal numérique. Il est également possible qu'un appareil remplisse à la fois la fonction de récepteur et de dispositif de présentation, l'important étant que les données circulent toujours dans le réseau domestique sous forme embrouillée garantissant une protection efficace contre les copies illicites.

## Revendications

**1.** Méthode de distribution sécurisée de données numériques représentatives d'un contenu multimédia par un fournisseur de contenu à travers un réseau de diffusion (5), lesdites données étant embrouillées par des mots de contrôle (CW) et mémorisées dans une base de données, qui comprend les étapes consistant à :
recevoir (100) un message de requête du contenu d'un dispositif de réception de contenu (2,20) raccordé audit réseau ;

    (a) chiffrer (107) les mots de contrôle à l'aide d'une clé de chiffrement ($K_{Pub\_Rec}$ ; $K_{PUB\_DHN}$) reçue dudit dispositif de réception de contenu (2,20) ; et
    (b) transmettre (108) audit dispositif de réception de :

        - lesdites données numériques embrouillées ; et
        - les mots de contrôle chiffrés à l'aide de la clé de chiffrement dudit dispositif de réception de contenu.

**2.** Méthode selon la revendication 1, **caractérisée en ce que** la clé de chiffrement($K_{Pub\_Rec}$) est une clé publique unique associée audit dispositif de réception de contenu.

**3.** Méthode selon la revendication 2, **caractérisée en ce qu'**elle comporte les étapes, antérieures aux étapes (a) et (b), consistant à :

    recevoir (104) la clé publique($K_{Pub\_Rec}$) du dispositif de réception et un certificat cryptographique associé à ladite clé publique ; et
    vérifier (106) la validité de la clé publique en analysant le certificat cryptographique associé,
    l'étape (a) n'étant effectuée qu'en cas de vérification positive.

**4.** Méthode selon l'une des revendications 1 à 3, **caractérisée en ce qu'**elle comporte les étapes, antérieures aux étapes (a) et (b), consistant à :

    embrouiller les données numériques avec les mots de contrôle ;
    stocker dans une base de données (10) associée audit fournisseur de contenu :

        - les données numériques embrouillées ; et
        - les mots de contrôle (CW) utilisés pour embrouiller lesdites données.

**5.** Méthode selon la revendication 4, **caractérisée en ce que** les mots de contrôle sont stockés dans ladite base de données en étant renfermés dans des messages de contrôle (ECM) et **en ce que** :

    - à l'étape (a), lesdits messages de contrôle (ECM) sont chiffrés à l'aide de la clé de chiffrement reçue du dispositif de réception ; et
    - à l'étape (b), les messages de contrôle chiffrés sont transmis au dispositif de réception de contenu.

**6.** Dispositif d'un fournisseur de contenu, le dispositif étant adapté pour la distribution sécurisée de données numériques représentatives d'un contenu multimédia à travers un réseau de diffusion (5), lesdites données étant embrouillées par des mots de contrôle (CW) et mémorisées dans une base de données, qui comprend :

des moyens pour recevoir un message de requête du contenu d'un dispositif de réception de contenu (2,20) raccordé audit réseau ;
des moyens pour chiffrer les mots de contrôle à l'aide d'une clé de chiffrement ($K_{Pub\_Rec}$ ; $K_{PUB\_DHN}$) reçue dudit dispositif de réception de contenu (2,20) ; et
des moyens pour transmettre audit dispositif de réception de :

- lesdites données numériques embrouillées ; et
- les mots de contrôle chiffrés à l'aide de la clé de chiffrement dudit dispositif de réception de contenu.

**7.** Dispositif selon la revendication 6, **caractérisée en ce que** la clé de chiffrement($K_{Pub\_Rec}$) est une clé publique unique associée audit dispositif de réception de contenu.

**8.** Dispositif selon la revendication 7, **caractérisée en ce qu'**il comprend :

des moyens pour recevoir la clé publique($K_{Pub\_Rec}$) du dispositif de réception et un certificat cryptographique associé à ladite clé publique ; et
des moyens pour vérifier la validité de la clé publique en analysant le certificat cryptographique associé,
le dispositif ne chiffrant les mots de contrôle qu'en cas de vérification positive.

**9.** Dispositif selon l'une des revendications 6 à 8, **caractérisée en ce qu'**il comprend :

des moyens pour embrouiller les données numériques avec les mots de contrôle ;
des moyens pour stocker dans une base de données (10) associée audit fournisseur de contenu :

- les données numériques embrouillées ; et
- les mots de contrôle (CW) utilisés pour embrouiller lesdites données.

**10.** Dispositif selon la revendication 9, **caractérisée en ce que** les mots de contrôle sont stockés dans ladite base de données en étant renfermés dans des messages de contrôle (ECM) et **en ce que** :

lesdits messages de contrôle (ECM) sont chiffrés à l'aide de la clé de chiffrement reçue du dispositif de réception ; et
les messages de contrôle chiffrés sont transmis au dispositif de réception de contenu.


**Patentansprüche**

**1.** Verfahren zur gesicherten Verteilung von repräsentativen digitalen Daten eines Multimediainhalts durch einen Inhalte-Anbieter über ein Verbreitungsnetzwerk (5), wobei die besagten Daten durch Steuerwörter (CW) verwürfelt und in einer Datenbank gespeichert werden, welches die Schritte umfasst, die bestehen im:
Empfangen (100) einer Anforderungsnachricht des Inhalts von einer Vorrichtung zum Inhalte-Empfang (2,20), die mit dem besagten Netzwerk verbunden ist;

(a) Verschlüsseln (107) der Steuerwörter mit Hilfe eines Verschlüsselungsschlüssels ($K_{Pub\_Rec}$; $K_{PUB\_DHN}$), der von der besagten Vorrichtung zum Inhalte-Empfang (2,20) empfangen wurde; und
(b) Übertragen (108) an die besagte Vorrichtung zum Empfang, von:

- den besagten verwürfelten digitalen Daten; und
- den Steuerwörtern, die mit Hilfe des Verschlüsselungsschlüssels der besagten Vorrichtung zum Inhalte-Empfang verschlüsselt wurden.

**2.** Verfahren nach Anspruch 1, **dadurch gekennzeichnet, dass** der Verschlüsselungsschlüssel ($K_{Pub\_Rec}$) ein eindeutiger öffentlicher Schlüssel ist, der der besagten Vorrichtung zum Inhalte-Empfang zugeordnet ist.

**3.** Verfahren nach Anspruch 2, **dadurch gekennzeichnet, dass** es die Schritte, vor den Schritten (a) und (b), umfasst, bestehend im:

Empfangen (104) des öffentlichen Schlüssels ($K_{Pub\_Rec}$) von der Vorrichtung zum Empfang und eines kryptographischen Zertifikats, das dem besagten öffentlichen Schlüssel zugeordnet ist; und
Überprüfen (106) der Gültigkeit des öffentlichen Schlüssels durch Analyse des zugeordneten kryptographischen Zertifikats,
wobei der Schritt (a) nur im Fall einer positiven Überprüfung ausgeführt werden kann.

**4.** Verfahren nach einem der Ansprüche 1 bis 3, **dadurch gekennzeichnet, dass** es die Schritte, vor den Schritten (a) und (b), umfasst, bestehend im:

Verwürfeln der digitalen Daten mit den Steuerwörtern;
Speichern in einer Datenbank (10), die mit dem besagten Inhalte-Anbieter verbunden ist:

- der verwürfelten digitalen Daten; und
- der zum Verwürfeln der besagten Daten verwendeten Steuerwörter (CW).

**5.** Verfahren nach Anspruch 4, **dadurch gekennzeichnet, dass** die Steuerwörter in der besagten Datenbank gespeichert werden, indem sie in Steuernachrichten (ECM) eingeschlossen werden, und dadurch, dass:

- im Schritt (a) die besagten Steuernachrichten (ECM) mit Hilfe des von der Vorrichtung zum Empfang erhaltenen Verschlüsselungsschlüssels verschlüsselt werden; und
- im Schritt (b) die verschlüsselten Steuernachrichten an die Vorrichtung zum Inhalte-Empfang übertragen werden.

**6.** Vorrichtung eines Inhalte-Anbieters, wobei die Vorrichtung für die gesicherte Verteilung von repräsentativen digitalen Daten eines Multimediainhalts über ein Verbreitungsnetzwerk (5) geeignet ist, wobei die besagten Daten durch Steuerwörter (CW) verwürfelt und in einer Datenbank gespeichert werden, welche umfasst:

Mittel zum Empfangen einer Anforderungsnachricht des Inhalts von einer Vorrichtung zum Inhalte-Empfang (2,20), die mit dem besagten Netzwerk verbunden ist;
Mittel zum Verschlüsseln der Steuerwörter mit Hilfe eines Verschlüsselungsschlüssels ($K_{Pub\_Rec}$; $K_{PUB\_DHN}$), der von der besagten Vorrichtung zum Inhalte-Empfang (2,20) erhalten wurde; und
Mittel zum Übertragen an die besagte Vorrichtung zum Empfang, von:

- den besagten verwürfelten digitalen Daten; und
- den mit Hilfe des Verschlüsselungsschlüssels der besagten Vorrichtung zum Inhalte-Empfang verschlüsselten Steuerwörtern.

**7.** Vorrichtung nach Anspruch 6, **dadurch gekennzeichnet, dass** der Verschlüsselungsschlüssel ($K_{Pub\_Rec}$) ein eindeutiger öffentlicher Schlüssel ist, der der besagten Vorrichtung zum Inhalte-Empfang zugeordnet ist.

**8.** Vorrichtung nach Anspruch 7, **dadurch gekennzeichnet, dass** sie umfasst:

Mittel zum Empfangen des öffentlichen Schlüssels ($K_{Pub\_Rec}$) von der Vorrichtung zum Empfang und eines kryptographischen Zertifikats, das dem besagten öffentlichen Schlüssel zugeordnet ist; und
Mittel zum Überprüfen der Gültigkeit des öffentlichen Schlüssels durch Analyse des zugeordneten kryptographischen Zertifikats,
wobei die Vorrichtung die Steuerwörter nur im Falle einer positiven Überprüfung verschlüsselt.

**9.** Vorrichtung nach einem der Ansprüche 6 bis 8, **dadurch gekennzeichnet, dass** sie umfasst:

Mittel zum Verwürfeln der digitalen Daten mit den Steuerwörtern;
Mittel zum Speichern in einer Datenbank (10), die mit dem besagten Inhalte-Anbieter verbunden ist:

- der verwürfelten digitalen Daten; und
- der zum Verwürfeln der besagten Daten verwendeten Steuerwörter (CW).

10. Vorrichtung nach Anspruch 9, **dadurch gekennzeichnet, dass** die Steuerwörter in der besagten Datenbank gespeichert werden, indem sie in Steuernachrichten (ECM) eingeschlossen werden, und dadurch, dass:

die besagten Steuernachrichten (ECM) mit Hilfe des von der Vorrichtung zum Empfang erhaltenen Verschlüsselungsschlüssels verschlüsselt werden; und
die verschlüsselten Steuernachrichten an die Vorrichtung zum Inhalte-Empfang übertragen werden

**Claims**

1. Secure distribution method of digital data representative of a multimedia content by a content supplier using a broadcast network (5), said data being scrambled by control words (CW) is stored in a database, that comprises the steps of:
receiving (100) a request message of the content of a content reception device (2,20) connected to said network;

(a) encrypting (107) the control words using an encryption key ($K_{Pub\_Rec}$; $K_{Pub\_DHN}$) received from said content reception device (2,20); and
(b) transmitting (108) to said reception device:

- said scrambled digital data, and
- the control words encrypted using the encryption key of said content reception device.

2. Method according to claim 1, **characterized in that** the encryption key ($K_{Pub\_Rec}$) is a unique public key associated with said content reception device.

3. Method according to claim 2, **characterised in that** it comprises the steps, prior to the steps (a) and (b), consisting in:

receiving (104) the public key ($K_{Pub\_Rec}$) of the reception device and a cryptographic certificate associated with said public key, and
checking (106) the validity of the public key by analysing the associated cryptographic certificate,
step (a) only being carried out in the event of positive verification.

4. Method according to one of claims 1 to 3, **characterised in that** it comprises the steps, prior to the steps (a) and (b), consisting in:

scrambling the digital data with the control words,
storing in a database (10) associated with said content supplier:

- the scrambled digital data, and
- the control words (CW) used to scramble said data.

5. Method according to claim 4, **characterised in that** the control words are stored in said database by being enclosed in control messages (ECM) and **in that**:

- in step (a), said control messages (ECM) are encrypted using the encryption key received from the reception device, and
- in step (b), the encrypted control messages are transmitted to the content reception device.

6. Device of a content supplier, the device being adapted for the secure distribution of digital data representative of a multimedia content through a broadcast network (5), said data being scrambled by control words (CW) and stored in a database, that comprises:

means for receiving a request message of the content of a content reception device (2,20) connected to said network;
means for encrypting the control words using an encryption key ($K_{Pub\_Rec}$; $K_{PUB\_DHN}$) received from said content reception device (2,20); and
means to transmit said reception device:

- said scrambled digital data, and
- the control words encrypted using the encryption key of said content reception device.

**7.** Device according to claim 6, **characterised in that** said encryption key ($K_{Pub\_Rec}$) is a unique public key associated with said content reception device.

**8.** Device according to claim 7, **characterised in that** it comprises:

means for receiving the public key ($K_{Pub\_Rec}$) of the reception device and a cryptographic certificate associated with said public key, and
means for checking the validity of the public key by analysing the associated cryptographic certificate,
the device only encrypting control words in case of positive verification.

**9.** Device according to one of claims 6 to 8, **characterised in that** it comprises:

means to scramble the digital data with the control words,
means to store in a database (10) associated with said content supplier:

- the scrambled digital data, and
- the control words (CW) used to scramble said data.

**10.** Device according to claim 9, **characterised in that** the control words are stored in said database by being enclosed in control messages (ECM) and **in that**:

said control messages (ECM) are encrypted using the encryption key received from the reception device, and
the encrypted control messages are transmitted to the content reception device.

FIG.1

FIG.2a

FIG.2b

EP 1 305 948 B1

SERVEUR VIDÉO ~1

DISPOSITIF RÉCEPTEUR ~2

CARTE À PUCE ~3

REQUÊTE CONTENU VIDÉO
100

CONDITIONS COMMERCIALES
101

CONDITIONS COMMERCIALES
102

DONNÉES PAIEMENT $|K_{Pub-Rec}|$ CERTIFICAT
104

DONNÉES PAIEMENT $|K_{Pub-Rec}|$ CERTIFICAT
103

105 VÉRIFICATION PAIEMENT

106 VÉRIFICATION $K_{Pub-Rec}$

107 CHIFFREMENT ECM

$E_{K_{Pub-Rec}}$ (ECM) $|$ DONNÉES EMBROUILLÉES
108

$E_{K_{Pub-Rec}}$ (ECM)
109

DÉCHIFFREMENT ECM
110

CW
111

DÉSEMBROUILLAGE DONNÉES VIDÉO
112

FIG.3

t        t

14

FIG.4

BASE DE
DONNÉES DE
CONTENU
VIDÉO

10

SERVEUR
VIDÉO

1

INTERNET

5

DISPOSITIF
RÉCEPTEUR

20

21

AUTORITÉ

4

DISPOSITIF DE
PRÉSENTATION

24

25

50

DISPOSITIF
D'ENREGISTREMENT

22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9930499 A
- WO 9856179 A
- WO 0011871 A
- EP 0936774 A